# EUROPEAN PATENT SPECIFICATION

(11) **EP 2 224 714 B1**
(45) Date of publication and mention of the grant of the patent: **30.03.2011**
(21) Application number: 09154028.6
(22) Date of filing: 27.02.2009
(51) Int. Cl.: H04M 3/487, G06Q 30/00

(54) **Time and device shifting of mobile advertising**
Zeit- und Geräteverschiebung bei der mobilen Werbung
Décalage temporel et de dispositif de publicité mobile

(43) Date of publication of application: 01.09.2010
(73) Proprietor: RESEARCH IN MOTION LIMITED, Waterloo, Ontario N2L 3W8 (CA)
(72) Inventor: Bosan, Sorel, Waterloo Ontario N2L 3L3 (CA); Zima, Janice, Waterloo Ontario N2L 3L3 (CA); Scott, Sherryl Lee Lorraine, Waterloo, Ontario N2L 3L3 (CA)
(74) Representative: Patel, Binesh

(56) References cited:
- EP-A- 1 003 344
- WO-Y-01/47264
- US-A1- 2004 110 517
- US-A1- 2008 147 505
- US-A1- 2008 275 764
- US-B1- 7 305 442

## Description

### FIELD OF THE INVENTION

The present invention relates generally to a system and method for controlling use of a mobile device via advertising and more particularly to time and device shifting of mobile advertising.

### BACKGROUND OF THE INVENTION

With the proliferation of communication devices, communication providers are constantly looking for new ways and mediums to communicate their messages, commercial or otherwise, to a large number of users. This is challenging because once users become accustomed to a message or message venue, they may ignore or skip these messages. Users may be more willing to agree to review such messages if the time, location or both for reviewing is convenient to them. A related concern is that mobile or handheld communication devices may be sensitive to battery power depletion and thus may need to monitor and minimize presentation of a message.

European patent application publication EP 1 003 344 published 24.05.2000 describes the simultaneous text and audio transmission for sponsored calls. There is described a combination of Global System for Mobile communications (GSM) capabilities including Short Message Service (SMS), Subscriber Identity Module (SIM) and Customized Applications for Mobile network Enhanced Logic (CAMEL) which allows an advertiser to pay a portion of the airtime cost of a call originated by a mobile subscriber after that subscriber has listened to a recorded advertisement. The combination delivers a text message that associates with a recorded audio advertisement. The text message, which may be referred to later, is stored by the subscriber's handset and may be a transcript of the audio advertisement, provide additional details of the audio advertisement or it may contain an electronic coupon associated with the advertisement. U.S. Patent No. 7 305 442 published 04.12.2007 describes asynchronous user-authorized advertising. There is described a system and method for advertising on a subscriber terminal. A server may send an advertising authorization request to the subscriber terminal. The advertising authorization request may comprise options that a user may select for accepting or rejecting an advertisement to be sent to the subscriber terminal. If the subscriber terminal accepts the advertisement, the server or subscriber terminal may wait for one or more triggering events to occur. The triggering events may include the subscriber terminal being idle, substantially stationary, and/or a specific time of day. Upon occurrence of the one or more triggering events, the subscriber terminal may display the advertisement on its display screen.

### BRIEF DESCRIPTION OF THE DRAWINGS

The invention will now be described by way of example only with reference to the following drawings in which:
**Figure 1** is a block diagram illustrating a wireless communication system and a communication device which communicates within this system in accordance with one embodiment;
**Figure 2** is an exemplary block diagram of a wireless communication device of Figure 1;
**Figure 3** illustrates an exemplary block diagram of software and data components of a wireless communication device of Figure 1;
**Figures 4A****,** **4B** **and** **5** illustrate respective exemplary flows of operations of a wireless communication device for presenting or postponing the presenting of messages in the system of Figure 1; and
**Figures 6****,** **7****,** **8 and 9** illustrate respective exemplary flows of operations of a server and system of Figure 1 for providing and verifying the presentation of messages as well as postponing the presenting of such messages by the wireless communication devices of

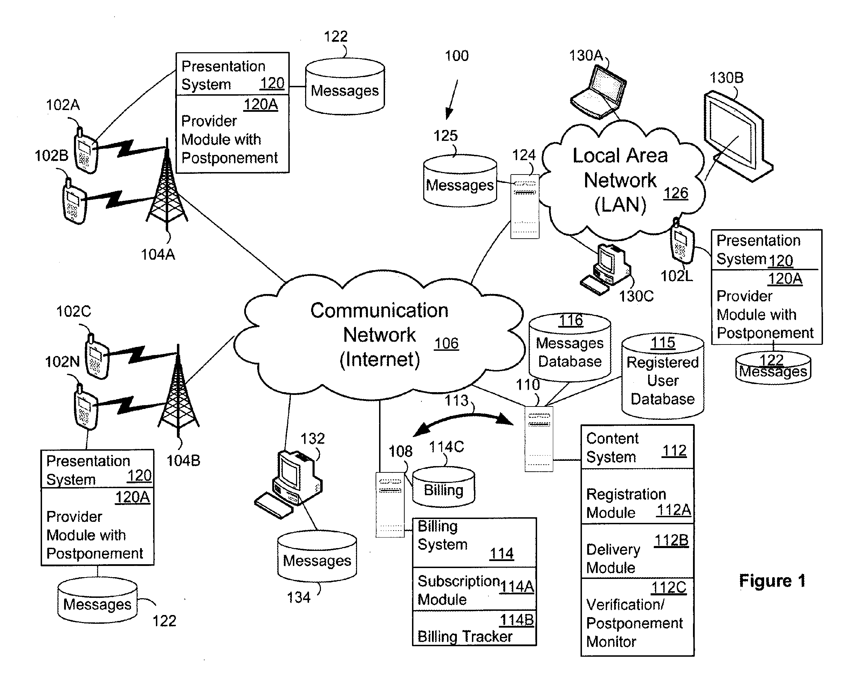

Figure 1. For convenience, like numerals in the description refer to like structures in the drawings.

### SUMMARY

Accordingly, there is a need for allowing and monitoring messages via venues such as communication devices, verifying a presenting of messages in such a way that a benefit may be determined for allowing the presenting. The presenting of messages may be postponed, for example ,to a later time, to a different communication device or to a different user. Postponement as well as verification may be centrally monitored and controlled.

In one aspect there is provided a method of communicating via a computing device, as recited in claim 1.

Also provided is a computing device as recited in claim 11.

In another aspect, there is provided a computer readable memory as recited in claim 12..

Also provided is a computer implemented system as recited in claim 13.

Also provided is a computer implemented method for a communication server, as recited in claim 15.

### DETAILED DESCRIPTION

Referring to Figure 1, a communication system is illustrated generally by numeral 100. The communication system 100 comprises a plurality of wireless communication devices 102A, 102B, 102C, ... 102N and a plurality of base stations or antenna 104A, 104B. The system 100 further comprises a communication network 106, a server 108 providing a billing system 114 and a content server 110, such as an advertisement server, providing a content distribution system 112 such as an advertisement system. System 100 further comprises a plurality of presentation devices 130A, 130B, 130C and 132 such as laptops personal computers, TV monitors, etc. for presenting messages. The presentation devices (e.g. 130A-130C) may be coupled for communication in a local area network 126 via gateway or other server 124 having a messages store 125, which server 124 is in turn coupled to network 106. A presentation device (e.g. 132) may be more directly coupled to network 106 and comprise a store 134 for messages.

Though LAN 126 is shown coupled through a server 124, presentation devices 130A-130N may be coupled through a shared network connection of a one of such devices (e.g. in a home network) or via an OMA Converge Personal Network Service (CPNS network), a 3GPP Personal Network Management (PNM) a 3GPP Personal Area Network (PAN) or a 3GPP enhance PAN (PANEPNM). Though devices 102 are generally shown coupled via base stations 104, a wireless communication device, such as 102L, may be coupled via a PAN/PNM CPNS network such as when coupled to LAN 126 via Wi-Fi. Each presentation device 130A-130C may comprise its own messages store (not shown) rather than use shared store 125.

Content server 110 comprises a messages database 116 for storing messages ("content") for system 112 to provide for presentation via devices 102A-102N, 130A-130C and 132 and a registered user database 115 for storing data for users registered to receive and verify the presentations of such messages. Server 110, system 112 and associated stores may comprise an OMA Mobile Advertising (MobAd) server/system.

At least some of devices 102A-102N comprise a presentation system 120 for presenting messages 122 received from system 112. Presentation systems 120 permit respective users of such devices 102A-102N to verify presentation of a particular message with system 112. As well, presentation systems 120 permit respective users to postpone the presentation of such a message. Postponement may comprise time shifting the presentation to the same device (e.g. user of device 102C postpones to device 102C) or another device (e.g. 132) which the user has registered with system 112. Such other devices may comprise one or more of presentation devices 130A-130C or 132. Presentation system 120 may permit a user to forward a message for presentation to another user, that is, another user registered with system 112 that is associated with the user requesting that the message be forwarded.

Communication system 100 of Figure 1 has been illustrated with a number of pertinent components for exemplary purposes only. Accordingly, a plurality of communication devices 102, base stations 104, communication networks 106, carrier servers 108, billing systems 114, servers 110 and systems 112 and related messages databases 116, etc. may be envisaged as needed. Communication devices 102A-102N are in communication with one another or other devices (e.g. other telephonic devices (not shown)) via the communication network 106 and the base station 104. Accordingly, system 100 may include several components such as a wireless network, a relay, a corporate server and/or a mobile data server (MDS) for relaying data between the base station 104 and the carrier system 108. An example of a corporate server is the BlackBerry Enterprise Server provided by Research In Motion Ltd.

As will be described, the communication system 100 is configured to provide one or more messages to communication devices 102A-102N. Further, the communication system 100 may be configured to verify presentation of the messages and to provide compensation to the user(s) of the communication devices 102A-102N as determined by the billing system 114 in response to allowing the message(s) to be outputted on the communication devices 102A-102N. For example, financial compensation, billing subsidy, additional phone or data traffic credits, or other benefit, etc. may be provided in exchange for reviewing presentation of the message. The benefit may be determined in accordance with the length of time of message or other parameters.

To facilitate user acceptance of such a service or to address level of service issues with respect to the devices 102A-102N, a user thereof may postpone the presentation of the message. To better ensure that a user is attentive to the message during its presentation, the message may be presented when a user desires to initiate a communication service via the device, for example, when desiring to make a voice call or composing an electronic message. It may be desirable at such times to postpone the presentation of a message. For example, battery or other device resources may be low. The urgency or importance of the desired communication service or the time, location or both of the making of the request for a communication service may be such that message presentation is inappropriate and its deferral is warranted.

Wireless communication services are typically provided on a service contract basis where the communication device user enters a service contract with a wireless carrier to have wireless service provided to the communication devices 102A-102N. Accordingly, in one embodiment, server 108 may comprise a carrier server configured to store information such as a particular communication device's user's name and billing information, wireless service plan, equipment type, and any other pertinent information to facilitate wireless communication for a particular communication device 102A-102N. The carrier server 108 is further coupled for communication with carrier infrastructure including a billing system 114. The billing system 114 comprises a subscription module 114A, and a billing tracker 114B. Subscription module 114A stores information 114C related to communication services for which the communication device is enrolled. The subscription information stored in the subscription module 114A may be updated and/or modified by a user of the communication device 102, by others authorized by the carrier (not shown) or by an administrator/user of the server 108. Server 108 and system 114 need not be associated with a carrier service provider but may be provided by or on behalf of another service provider or entity such as an application provider.

In one embodiment, the subscription module 114A may further be configured to track and store subscription information related to which communication devices 102A-102N are subscribed to receive messages 116 via system 112, for example to subsidize billing charges or to receive other benefits.

The billing tracker 114B is configured to track and store billing information for the communication devices 102A-102N based on the services plan and usage of various services available to the communication devices 102A-102N. In one embodiment, the billing tracker 114B is further configured to determine and provide a benefit (e.g. financial compensation) to the user(s) of the communication devices 102A-102N based on allowing the messages to be outputted on the respective communication devices 102A-102N. In one embodiment, the benefit is based on the amount of time or instances that the user of a communication device has allowed the message to be outputted on the communication device. Billing subsidy information 113 may be received from system 110.

At least some of the communication devices 102A-102N are configured to receive and present the messages 122. These devices 102A-102N may be configured to monitor message usage for one or more messages (e.g. played either during an incoming call at a recipient communication device 102A-102N, or at a caller communication device 102A-102N during an attempted call to a recipient party). Each communication device 102A-102N may further be configured to provide the message usage information (e.g. to the system 112 for billing system 114) for determining the appropriate benefit for the account associated with the respective communication device. The presentation of a particular message may be verified to the system 112 by the presentation system 120.

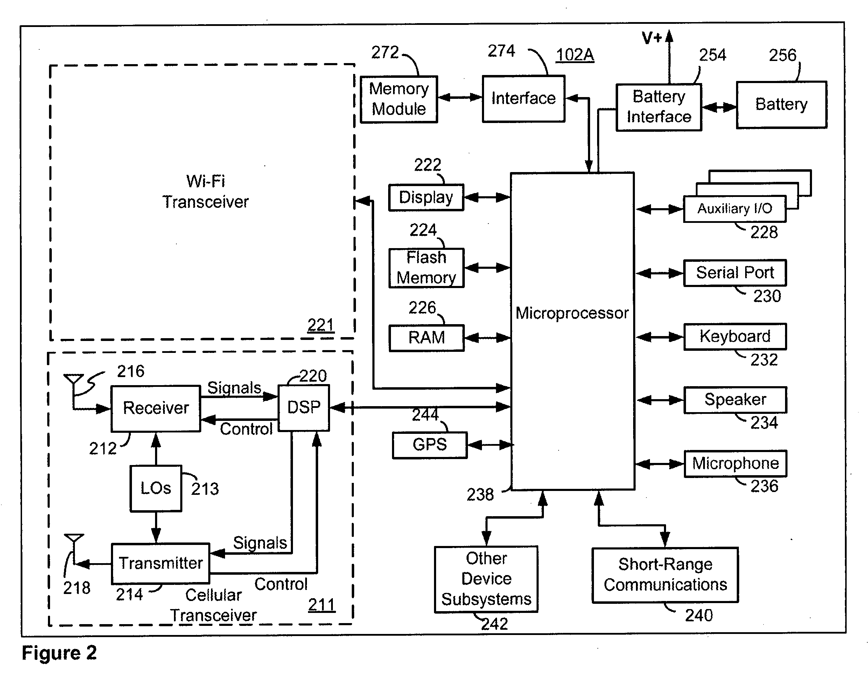

In a further embodiment, tracking message usage may comprise monitoring various parameters for verification that the user has actually listened to, paid attention to, or is actually accompanied by the communication device 102A-102N. For example, determining whether the user has actually listened to or paid attention to the message outputted, may include receiving an acknowledgment from the user of the communication device while the message is playing. Accordingly, in the present embodiment, the billing tracker 114B may provide compensation if it is verified (e.g. via system 112) that the user has actually listened to or watched the messages according to the pre-determined verification and acknowledgement parameters. For example, a user of the communication device may be automatically requested at predetermined time intervals to input one or more predetermined keys on the keyboard 232 (Fig. 2) or other predetermined inputs on the communication devices 102A-102N to acknowledge that they are reviewing the message being presented. Other measures for determining whether the user is actually paying attention to the messages may also be used.

Referring again to Figure 1, the carrier system 108 is coupled for communication with the server 110 having a messages database 116. The messages database 116 stores a plurality of messages thereon for access by the server 110. The server 110 may be further configured (112B) to provide the messages to the communication devices 102A-102N either on an as-needed basis (i.e. a message is provided to the respective communication devices 102A-102N when there is an indication of an incoming or outgoing call at the respective communication devices 102A-102N) or pushed in other ways (i.e. via one or more electronic communications to the device to provide the messages). In one embodiment server 110 and delivery module 112B may comprise an OMA Dynamic Content Delivery server or an OMA Broadcast (BCAST) server. Alternatively, one or more messages may be downloaded by the communication devices as desired (e.g. via a web browser of the communication device) and stored for subsequent presenting. That is, for message customization purposes, the user may browse one or more web pages associated with the server 110 to select and download (not shown) the desired messages to be played.

A registration module 112A may be provided to enroll users and their respective devices and determine and set (store) permissions or other policies for verifying and postponing messages. For example, in one embodiment, some users in a related service plan may be permitted to forward messages to fellow users in the related plan. In this way, some users may be freed from reviewing such messages or have their requirement reduced and serviced by other users.

Verification and postponement monitor 112C may be configured to monitor the verification of the presenting of messages via respective user devices 102A-102N. Monitor 112C may monitor a requirement to verify which requirement may be established for a user and recorded in database 115. The requirement may be entered such as upon delivery of messages to the user's device by module 112B. Monitor 112C may receive verification data from respective devices 102A-102N. Monitor 112C may manage the postponement of the presenting of messages in accordance with postponement data received from such devices 102A-102N. Postponements may comprise time shifts, device shifts or (permissible) forwards to other users. As such, monitor 112C may provide messages to device shift devices or other users and receive verification data from device shift devices such as devices 130A-130C or 132 in accordance with the postponement data.

Though shown as a separate component, server 110 and system 112 may be configured for operation on or with other components of system 100. For example, system 112 may be provided by an enterprise-oriented or home-oriented data communication server. Such a group coordinator/server may control the communication of information among a group of communication devices comprising two or more of communication devices 102A-102N. For example, a group coordinator/server may provide a relay to forward or otherwise communicate electronic or other messaging, synchronize information with other systems, provide a secure gateway to private information (e.g. in an enterprise) as well as a gateway to public information (e.g. via the Internet). Communication between the group coordinator/server and the communication devices it controls may be secured such as via encryption techniques. At least some of the group of communication devices may share respective communication service plans or contracts. In accordance with these plans, the presenting of messages to at least some of the users of such devices may be used to reduce plan costs or enable additional users to receive service that might otherwise not receive services. Such benefits may be further controlled by billing system 114. A system may be configured within this environment to provide coordinated benefits within the home or enterprise context.

The communication system 100 described herein is exemplary and changes may be made to one or more components to accommodate different network configurations without affecting the scope of the disclosure described and claimed herein. Further, although the present description specifically recites a wireless communication device 102, it will be appreciated that other types of devices, including both wired and wireless devices, may similarly be employed.

Referring to Figure 2, components of an exemplary wireless communication device (102A) are illustrated in greater detail. The communication device 102A is often a two-way communication device having both voice and data communication capabilities, including the capability to communicate with other computer systems. Depending on the functionality provided by the communication device 102A, it may be referred to as a data messaging device, a two-way pager, a cellular telephone with data messaging capabilities, a wireless Internet appliance, or a data communication device.

The communication device 102A includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which communication device 102A is intended to operate. The communication device 102A may includes a second wireless communication subsystem (e.g. 221) configured for Wi-Fi or other wireless network communications.

The communication device 102A includes a microprocessor 238 which controls general operation of the communication device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as BLUETOOTH (Bluetooth™) for example, and any other device subsystems or peripheral devices generally designated at 242. The communication device 102A may also include a positioning device 244, such as a GPS receiver for example, for receiving positioning information. As will be described, the GPS receiver may be configured to detect and provide location information in order to determine if the location of the communication device 102A meets pre-determined location criteria (i.e. criteria set by the billing system 114). For example, based on whether the pre-determined location information is met, the billing system 114 may then determine whether to provide financial compensation for the message outputted on the communication device 102A.

Operating system software used by the microprocessor 238 may be stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, enables execution of software applications on the communication device 102A. A predetermined set of applications, which control basic device operations, is installed on the communication device 102A during its manufacture. These basic operations typically include data and voice communication applications, for example. Additionally, applications may also be loaded onto the communication device 102A through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the communication device 102A and may provide enhanced on-device features, communication-related features, or both.

The display 222 is used to visually present an application's graphical user interface (GUI) to the user. The user can manipulate application data by modifying information on the GUI using an input device such as the keyboard 232 for example. Depending on the type of communication device 102, the user may have access to other types of input devices, such as, for example, a scroll wheel, trackball, light pen or touch sensitive screen.

Network access may be associated with a subscriber or user of communication device 102A, and therefore communication device 102A may comprise a memory module 262 (for example such as a Subscriber Identity Module or "SIM" card or a Removable User Identity Module (R-UIM)), that may be inserted in or connected to an interface 264 in order to operate in the network. Alternatively, memory module 262 may be a non-volatile memory which is programmed with configuration data by a service provider so that device 102A may operate in the network. Device 102A may be a mobile battery-powered device and includes a battery interface 254 for receiving one or more (rechargeable) batteries 256. Such a battery 256 provides electrical power to most if not all electrical circuitry in device 102A, and battery interface 254 provides for a mechanical and electrical connection for it. The battery interface 254 is coupled to a regulator (not shown in Fig. 2) which provides power V+ to all of the circuitry.

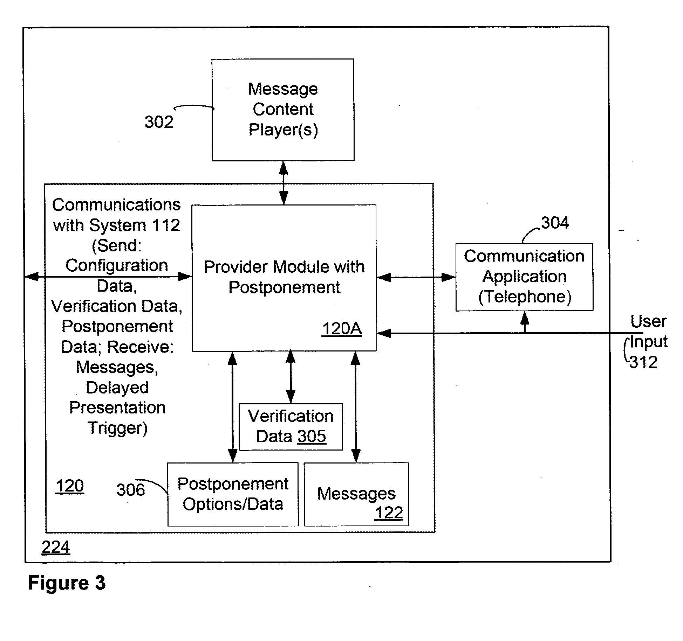

Referring now to Figure 3, there is shown in more detail and in accordance with an embodiment selected software and data components of memory 224. There is shown presentation system 120, provider module with postponement capabilities 120A, verification data 305, and postponement options and data 306. Also shown are messages store 122, message content player(s) 302 for presenting the messages and an exemplary communication application 304 such as a telephone application for making and receiving voice calls. Message content players may include one or more media players for presenting audio, video, text or other media content of a message from store 122. Such a player or player may be configured to work with application 304, a browser (not shown), electronic messaging application (e.g. email, SMS, IM etc.) (not shown), or other application (not shown).

In one embodiment, presentation system 120 can be an OMA MobAd Ad Engine or an OMA Dynamic Content delivery (DCD) Client. Presentation system 120 (e.g. provider module 120A) may be configured to receive and store messages, for presenting via the players 302, from server 110 and delivery module 112B of system 112. Further, presentation system 120 may be configured to provide configuration (e.g. registration data for database 115) for the services of system 112 to registration module 112A. Presentation system 120 may be configured to verify the presenting of a message via device 102, storing and providing verification data 305 to verification and postponement monitor 112C. Presentation system 120 may be configured to postpone the presenting of a message, providing postponement data to verification and postponement monitor 112C. Presentation system 120 may be configured to receive a delayed presentation trigger from verification and postponement monitor 112C, to initiate the presentation of a postponed message.

Presentation system 120 may provide postponement options to the user (e.g. in a GUI (not shown) for time shifting, device shifting or forwarding) and receive user input 312 to determine postponement particulars for the presenting of a respective message. User input 312 to indicate a request for communications, such as to application 304 may be used to trigger message presentation such as via system 120.

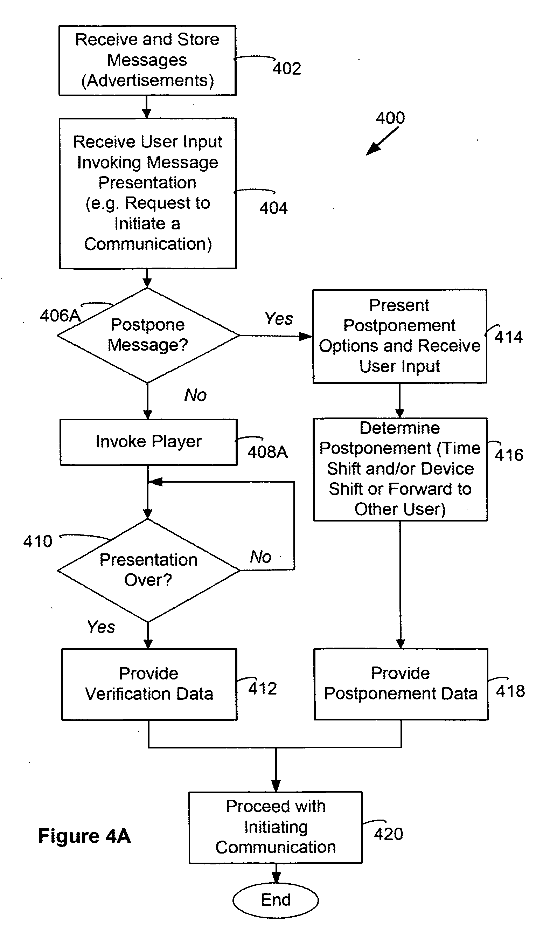

Referring to Figure 4A, there is illustrated a flow of operations 400, in accordance with one embodiment, for presenting and verifying or postponing the presenting of a message by a device such as device 102A. In the present embodiment, the invocation of a request for communication services such as the making of a telephone call or other communication may initiate the presenting of a message. That is, the presenting of a message is a precursor to initiating the communication. As a preliminary step (402), one or more messages is (are) received and stored. However, it is understood that such a step 402 may be responsive to the request.

At 404, the user input invoking the message presentation is received. A determination is made whether to present a message (406A). The determination operations may be wholly automatic or involve user input. For example in one embodiment, a dialog (e.g. GUI pop-up) may query whether the message is to be presented or postponed. Operations then respond to a user's input accordingly. Alternatively no postponement inquiring GUI need be presented and device 102A may accept a key or other input to invoke the postponement.

In an automatic mode of operation, user input is not required and operations determine to postpone by examining real time data. For example, if the communication request is an emergency call, message presentation may be automatically deferred (not shown). If certain device resources are determined to be too low (e.g. battery level), message presentation may be automatically deferred (not shown). If sufficient credits have already been accumulated (e.g. for the current month of service or another period), a requirement to verify the presentation of a message need not be necessary. Calendar data, presence data, profile data or user setting data, etc, suggesting that the user is in a meeting or does not want to be disturbed (e.g. the device notification settings are in a "quiet mode" indicating do not disturb or a user defined time period is set indicating no messages are to be presented (e.g. during business hours)) may be examined and a determination may be made to postpone (not shown). In one embodiment, a list of applications that, when active or invoked for action ought not to be interrupted for the presentation of messages may be defined and reviewed to determine whether to postpone. The list may be user configurable. In a similar way a list of applications that when active or invoked for action may be interrupted with a message may be defined and reviewed to determine postponement. Conflicts, such as when an application from each list is active when a determination is being made, may be resolved by postponing the presenting automatically or providing a user dialog to query whether to postpone. In one embodiment, a setting may automatically time shift messages for a pre-determined number of hours (e.g. two hours). This may be user option for changing a default value. Though not shown, device 102A may look to local stores or APIs for such data or query system 112 or other systems for such information to make this automatic determination.

If the message is to be presented (e.g. via No branch), the player is invoked and the message presented (408B). Upon completion 410, verification data is determined and provided. The verification data 305 may be provided to verification and postponement monitor 112C. In one embodiment, verification of the presenting of the specific message is provided. Thus the verification data 305 may comprise a user identifier as well as a message identifier to enable tracking by system 112. At 420, operations proceed to serve the request for communication services received at step 404. Though shown as occurring before step 420, the providing of verification data 305 may be done at a different time: for example, verification data 305 may be batched and provided during off-peak hours or upon synching data via wired or other connection.

User input directed postponement operations are now described. At step 406A, it may be determined that the presenting of a message ought to be postponed. Via Yes branch to step 414, if a user input is received directing postponement, postponement options are presented. Postponement may comprise a time shift to the current device or to another device of the current user registered with system 112. The postponement may comprise a forward to another user. In one embodiment, the other user is registered with system 112 and associated with the user forwarding the message thereby to provide a limit (i.e. authorization) to forward. At step 416, postponement data is determined and at step 418 provided such as to system 112.

Similarly, at 420, operations proceed to serve the request for communication services received at step 404. Though shown as occurring before step 420, the providing of verification data 305 may be done at a different time: for example, verification data 305 may be batched and provided during off-peak hours or upon synching data via wired or other connection. In another embodiment (not shown) operations may be configured such that device 102A maintains postponement data locally, particularly for time shifts relative to the device 102A and sending postponement data to system 112 for device shifts or forward to other users. In this way, a delayed presentation trigger to present the message at the time shifted time may be generated by the device 102A and need not be received from system 112. In a redundant configuration both device 102A and system 112 may maintain postponement data and generate triggers for delayed presentation of the message by device 102A.

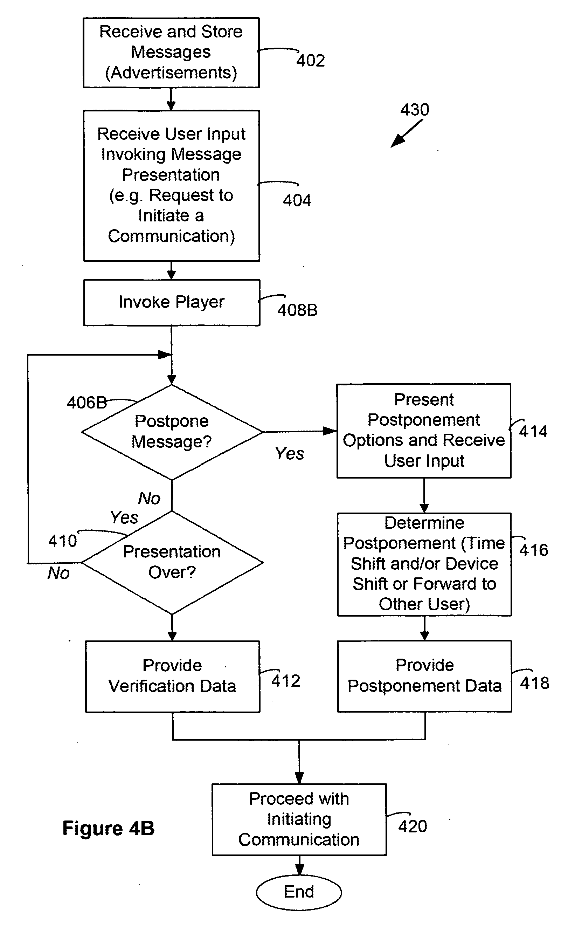

Figure 4B illustrates operations 430 similar to operations 400. However steps 408B and 406B are performed in a different order in operations 430 such that the message may be postponed even after its presenting begins (Figure 4B). Operations may be configured whereby determinations may be to postpone a message both before commencement and during presentation (not shown). In an alternative embodiment (not shown), operations 430B may be configured to perform automatic postponement determination operations prior to initiating the message (408B). For example, operations may be performed to determine that the user is in a meeting and postponement ought to be automatically deferred as described above with reference to Figure 4A.

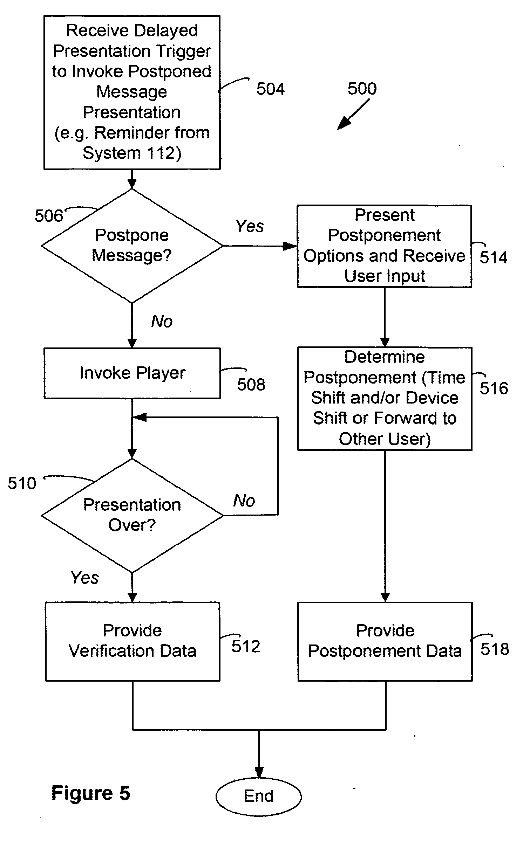

Referring to Figure 5, there is illustrated a flow of operations 500, in accordance with one embodiment, for presenting and verifying or postponing the presenting of a message for a device such as 102A. At step 502, a delayed presentation trigger to invoke the presentation of the message is received. In the present embodiment, the trigger is received from system 112. In another embodiment as described with reference to Figure 4A, the trigger may be generated by the device 102A. Operations 506-518 are illustrated similarly to operations 406A-418 by way of example. In some embodiments, the delayed presentation of a message need not be invoked in association with a request for communication or other services from device 102A. The presentation may be independent. Operations 500 may be configured similarly as discussed in relation to operations 430 for postponing a delayed presentation of a message after the presenting is started (not shown).

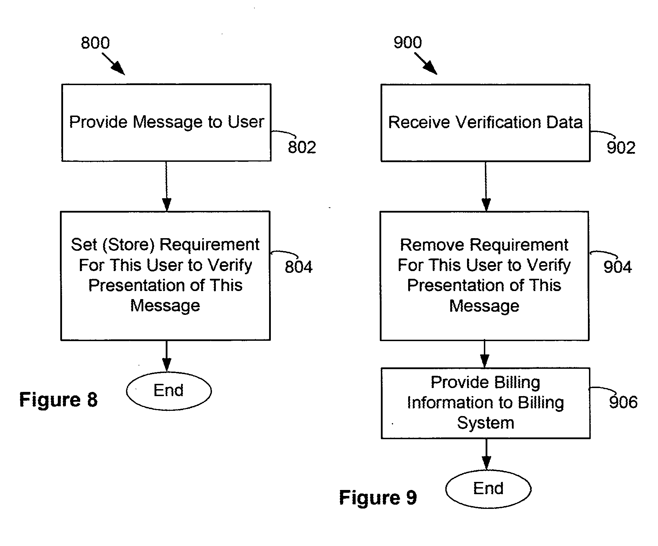

Though not shown, an interface may be provided via device 102A (or other similar communication device) for a user to invoke the presentation of messages, including postponed messages on an ad hoc basis, independent of a communication service request or delayed presentation trigger. The presenting and verifying of such may be verified, sending verification data 305 to system 112. The receipt of such a verification may be used to remove a verification requirement. See for example operations of Figure 9. For example, a user may request a time shifted presenting of a message but find time before the time shift to review the message. In such a way, the user may invoke the presenting and verify such, pre-empting the time shifted postponement.

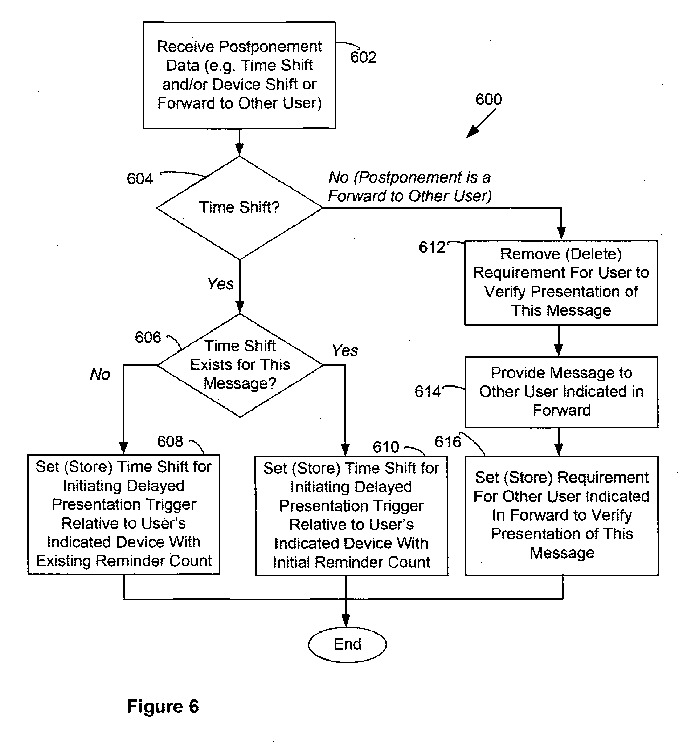

Figure 6 illustrates a flow of operations 600 of system 112 for postponing the presenting of a message via a device (e.g. 102A). At step 602, postponement data is received from device 102A. At 604, a determination is made whether the postponement comprises a time shift or a forward to another user.

A time shift may be relative to device 102A or relative to another device (e.g. 130A-130C or 132). Postponement data may indicate a specific time (e.g. 10:00 PM) or relative time delay (e.g. 3 hours) for time shifting the presenting of the message. Postponement data may only specify a device and permit the system 112 to determine an appropriate time. A time shift and device shift may be similarly treated by system 112. For example, to set and store a data entry for postponing the presenting of the message to the user, system 112 may determine the time at which and device to which a reminder (i.e. delayed presentation trigger) is to be sent. A device shift however may occasion the providing of the message to the indicated device for presenting and verifying the presenting of the message. In one embodiment (not shown), an electronic message (e.g. email, IM or other message) is sent to an account or application associated to the other device. The electronic message may include the message to be presented or a link or other retrieval means to pull the message. For example the electronic message may comprise HTML or XML or other coding to pull the message and invoke a browser and/or player to present the message and invite or otherwise direct verification of the presenting for providing to the system monitor 112C.

In the present embodiment, as noted with reference to Fig. 5, the presenting of a message may be postponed more than once. As such, when examining postponement data, an earlier data entry may exist in system 112 for the user and the message (606). Setting and storing a data entry for the postponement may comprise making a first postponement data entry (e.g. in database 115) (via No branch to 608) or updating an earlier entry (via Yes branch to 610) for the message.

With reference as well to Figure 9, a reminder counter may be used to limit the number of postponements of a particular message by a user. Alternatively, or in addition, a time threshold may be used (e.g. providing a predetermined maximum length of time (one or more days or a week)) to limit the postponement. Once the reminder counter threshold or time threshold is satisfied, the presenting of the message may be cancelled. Suitable billing information may be forwarded to the billing system responsive to the failure to verify. For example, the billing system may be advised to decrease any benefit to be provided.

Referring again to Figure 6, if the postponement data is a forward type (via No branch at 604), any requirement for the current user to verify the presenting of the message may be removed (e.g. from database 115) (step 612). In one embodiment to authorize forwarding (though not shown), prior to such operations 612, the user to whom the message is to be forwarded (the "other user") may be confirmed against database 115. If the current user requesting the forward postponement is not permitted to forward to this other user indicated in the postponement data, the current user may be so advised and/or suitable billing information may be forwarded to the billing system 114. The requirement to verify the message may remain and the forward request may be treated as a time shift using default data (not shown) to send a trigger for a delayed presentation back to the current user. Otherwise, if the request is a permissible forward (e.g. either because a check is not performed or a check is successful), at 614 and 616, the message may be forwarded to the other user indicated in the postponement data and a requirement to verify is set in database 115.

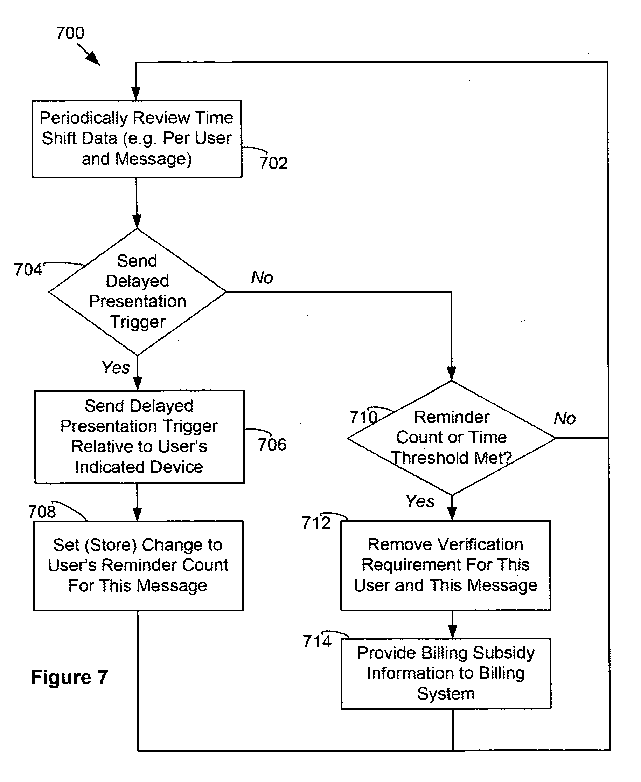

Figure 7 illustrates operations 700 for monitoring the postponement data entries in database 115 to trigger the delayed presenting of the message in accordance with the time and device shifts for each respective user and his or her respective postponed messages (702-704). The data entries may be reviewed (e.g. periodically) and a determination made whether it is time to send a delayed presentation trigger to a device and update the reminder counter (via Yes branch to steps 706 and 708). Alternatively a determination may be made whether sufficient reminders have been sent or time has passed such that the requirement to verify is removed and a billing note sent (via No branch to steps 710 to 714).

Operations 800 in Figure 8 show a manner of providing a message to a user and setting a requirement for the user to verify the presenting of the message (802 and 804). The requirement may be established via setting and storing a data entry in database 115 for the user and the particular message using an appropriate message ID. Any verification data 305 from the user may comprise the message ID. Communications between the devices 102A-102N, 130A-130C and 132 system 112 may be encrypted to avoid verification fraud.

Figure 9 illustrates operations 900 for verifying the presenting of a message. Verification data is received (902) from a user's device e.g. 102A-102N or a device shifted device 130A-130C, 132. The verification data may comprise a user identification and a message identification and optionally a device identification for authenticating the verification (the device identification can include an identification of component 120 and component 304). The verification data is matched to the data entry in database 115 establishing the requirement to verify and the requirement removed as appropriate (904). This removal may remove (e.g. inactivate) any postponement data stored for the user for this message. Suitable billing information 113, responsive to a successful verification, may be provided to the billing system (906).

Operations described herein may be configured in software and/or hardware for controlling respective computer systems (e.g. processors and memory storing instructions and/or data to configure the processors) to perform the methods described.

Although certain embodiments have been described herein, it will be understood by those skilled in the art that variations may be made. Messages may be presented to the user in other manners that are not reliant upon direct invocation by the user such as described with reference to a telephone application. For example, messages may be presented when invoking (e.g. launching or otherwise initiating) another particular communication application such as an email, instant message (IM) or short message service (SMS) ("txt") message application. Messages may be presented in response to a received communication, for example, when a user initiates a voice call answer or when a user initiates operations to review a new data message.

Messages may be presented when a user powers on their device or unlocks it, such as by entering a password to enable interaction (e.g. with an idle but otherwise an active device). Messages may be presented "spontaneously" and not responsive to user input per se. For example, when a media application (i.e. player) is active, such as when playing music, a message may be presented between tracks. Messages may be presented in accordance with a schedule (for example every N minutes). Though primarily described with reference to messages comprising advertisements, other messages may be contemplated. For example, a message may comprise a notice or other informational content that does not advertise a product or service.

Though described with reference to wireless communication devices, similar operations may be performed for wired communication devices such as appropriately configured desktop computers, telephone handsets, etc.

## Claims

1. A method of communicating via a computing device (102A-102N), the method comprising:
receiving (404) a first input (312) indicating a request for initiating a communication via the computing device, wherein a precursor to initiating the communication comprises presenting a message (122) via the computing device in response to said request, and the method being **characterized by**:
determining (406A, 406B) whether to postpone the presenting of the message via the computing device to thereby initiate the communication without requiring the prior presenting of the message;
postponing (414, 416) the presenting in accordance to the determining; and
initiating (420) the communication in accordance to the determining.

2. The method of claim 1 wherein said determining (406A) is performed prior to invoking (408A) the presenting of the message.

3. The method of claim 1 comprising invoking (408B) the presenting of the message and wherein said determining (406B) is performed during said presenting such that said postponing interrupts the presenting of the message.

4. The method of any one of claims 1 to 3 wherein said determining (406A, 406B) is performed in response to receiving a second input (312) via the computing device.

5. The method of any one of claims 1, 2, or 3 wherein said determining (406A, 406B) is performed automatically without a receiving a second input via the computing device.

6. The method of any one of claims 1, to 5 further comprising determining (414, 416) postponement data (305) and providing (418) the postponement data to manage the postponing of the presenting of the message.

7. The method of claim 6 further comprising presenting (500) the message via the computing device in accordance with the postponement data.

8. The method of claim 7 wherein providing the postponement data comprises communicating (418) the postponement data to a communication system (110, 112) configured to monitor the verification of the presenting of messages via computing devices and wherein the method further comprises receiving (504) a trigger for presenting the message in response to the postponement data.

9. The method of claim 6 or claim 7 wherein the postponement data (416, 516) comprises information indicating whether to:
(a) postpone the presenting of the message via the computing device to a different time;
(b) postpone the presenting of the message via another computing device; or
(c) forward to another user the message to be presented.

10. The method of any one of claims 1 to 9 comprising providing verification data (412, 512) in response to the presenting of the message via the computing device.

11. A computing device (102A-102N) **characterized by**: a communications sub-system (211, 221, 242), a processor (238) and a memory (224) comprising instructions and data which when executed configure the processor to perform a method of communicating in accordance with any one of claims 1 to 10.

12. A computer readable memory (224) **characterized by**: which, when executed on a computing device, cause the computing device to implement a method of communicating in accordance with any one of claims 1 to 10.

13. A computer implemented system (110,112) for managing the presenting of messages (122) on one or more communication devices (102A-102N, 130A-130C, 132), the system comprising:
a message database (116) for providing messages to the communication devices for presenting as a precursor to initiating a communication via a respective communication device, **characterized in that** at least some of the communication devices are configured to determine whether to postpone the presenting of the message via the computing device to thereby initiate the communication without requiring the prior presenting of the message; and
a verification and postponement monitor (112C) for monitoring a verification of the presenting of the messages via the respective communication devices wherein the verification and postponement monitor is configured to:
receive (602) postponement data (306) from respective devices to postpone the presenting of messages;
postpone (604-616, 700) the presenting of messages in accordance with the postponement data;
receive verification data (305) from respective devices verifying the presenting of messages; and
provide (900) billing subsidy information (113) in response for determining a benefit.

14. The system of claim 13 wherein the verification and postponement monitor is configured to provide (706) a delayed presentation trigger to a respective communication device in accordance with the postponement data.

15. A computer implemented method for a communication server 110 to manage the presenting of messages on one or more communication devices, the method comprising:
providing (800) messages (116, 122) to the communication devices for presenting as a precursor to initiating a communication via a respective communication device, **characterized in that** at least some of the communication devices are configured to determine .
whether to postpone the presenting of the message via the computing device to thereby initiate the communication without requiring the prior presenting of the message;
monitoring (800, 900) the verification of the presenting of the messages;
receiving (600) postponement data from respective devices to postpone the presenting of messages; and
postponing (604-616, 700) the presenting of messages in accordance with the postponement data.

## Patentansprüche

1. Verfahren zum Kommunizieren über eine Computervorrichtung (102A-102N), wobei das Verfahren aufweist:
Empfangen (404) einer ersten Eingabe (312), die eine Anforderung zum Initiieren einer Kommunikation über die Computervorrichtung anzeigt,
wobei ein Vorläufer zum Initiieren der Kommunikation ein Präsentieren einer Nachricht (122) über die Computervorrichtung in Reaktion auf die Anforderung aufweist, und wobei das Verfahren **gekennzeichnet ist durch**:
Bestimmen (406A, 406B), ob die Präsentation der Nachricht über die Computervorrichtung verschoben werden soll, um **dadurch** die Kommunikation zu initiieren, ohne das vorherige Präsentieren der Nachricht zu erfordern;
Verschieben (414, 416) des Präsentierens in Übereinstimmung mit der Bestimmung; und
Initiieren (420) der Kommunikation in Übereinstimmung mit der Bestimmung.

2. Verfahren gemäß Anspruch 1, wobei das Bestimmen (406A) vor einem Aufrufen (408A) des Präsentierens der Nachricht durchgeführt wird.

3. Verfahren gemäß Anspruch 1, das ein Aufrufen (408B) des Präsentierens der Nachricht aufweist und wobei die Bestimmung (406B) während des Präsentierens durchgeführt derart wird, dass das Verschieben die Präsentation der Nachricht unterbricht.

4. Verfahren gemäß einem der Ansprüche 1 bis 3, wobei die Bestimmung (406A, 406B) in Reaktion auf ein Empfangen einer zweiten Eingabe (312) über die Computervorrichtung durchgeführt wird.

5. Verfahren gemäß einem der Ansprüche 1, 2 oder 3, wobei die Bestimmung (406A, 406B) automatisch ohne ein Empfangen einer zweiten Eingabe über die Computervorrichtung durchgeführt wird.

6. Verfahren gemäß einem der Ansprüche 1 bis 5, das weiter aufweist Bestimmen (414, 416) von Verschiebedaten (305) und Vorsehen (418) der Verschiebedaten, um das Verschieben des Präsentierens der Nachricht zu verwalten.

7. Verfahren gemäß Anspruch 6, das weiter aufweist Präsentieren (500) der Nachricht über die Computervorrichtung in Übereinstimmung mit den Verschiebedaten.

8. Verfahren gemäß Anspruch 7, wobei ein Vorsehen der Verschiebedaten aufweist ein Kommunizieren (418) der Verschiebedaten an ein Kommunikationssystem (110, 112), das konfiguriert ist zum Überwachen der Verifizierung des Präsentierens von Nachrichten über Computervorrichtungen und wobei das Verfahren weiter aufweist ein Empfangen (504) eines Auslösers zum Präsentieren der Nachricht in Reaktion auf die Verschiebedaten.

9. Verfahren gemäß Anspruch 6 oder Anspruch 7, wobei die Verschiebedaten (416, 516) Information aufweisen, die anzeigt, ob:
(a) das Präsentieren der Nachricht über die Computervorrichtung auf einen anderen Zeitpunkt verschoben werden soll;
(b) das Präsentieren der Nachricht über eine andere Computervorrichtung verschoben werden soll; oder
(c) die zu präsentierende Nachricht an einen anderen Benutzer weitergeleitet werden soll.

10. Verfahren gemäß einem der Ansprüche 1 bis 9, das aufweist ein Vorsehen von Verifizierungsdaten (412, 512) in Reaktion auf das Präsentieren der Nachricht über die Computervorrichtung.

11. Computervorrichtung (102A-102N), die **gekennzeichnet ist durch**: ein Kommunikationsteilsystem (211, 221, 242), einen Prozessor (238) und einen Speicher (224), der Anweisungen und Daten aufweist, die bei Ausführung den Prozessor konfigurieren, ein Verfahren eines Kommunizierens in Übereinstimmung mit einem der Ansprüche 1 bis 10 durchzuführen.

12. Computerlesbarer Speicher (224), der **gekennzeichnet ist durch**:
Anweisungen, die bei Ausführung auf einer Computervorrichtung die Computervorrichtung veranlassen, ein Verfahren eines Kommunizierens in Übereinstimmung mit einem der Ansprüche 1 bis 10 zu implementieren.

13. Computerimplementiertes System (110, 112) zum Verwalten des Präsentierens von Nachrichten (122) auf einer oder mehreren Kommunikationsvorrichtungen (102A-102N, 130A-130C, 132), wobei das System aufweist:
eine Nachrichtendatenbank (116) zum Liefern von Nachrichten an die Kommunikationsvorrichtungen zum Präsentieren als einen Vorläufer zum Initiieren einer Kommunikation über eine jeweilige
Kommunikationsvorrichtung, **dadurch gekennzeichnet, dass** zumindest einige der Kommunikationsvorrichtungen konfiguriert sind zum Bestimmen,
ob das Präsentieren der Nachricht über die Computervorrichtung verschoben werden soll, um **dadurch** die Kommunikation zu initiieren, ohne das vorherige Präsentieren der Nachricht zu erfordern; und
eine Verifizierungs- und Verschiebe-Überwachung (112C) zum Überwachen einer Verifizierung des Präsentierens der Nachrichten über die jeweiligen Kommunikationsvorrichtungen, wobei die Verifizierungs- und Verschiebe-Überwachung konfiguriert ist zum:
Empfangen (602) von Verschiebedaten (306) von jeweiligen Vorrichtungen, um das Präsentieren von Nachrichten zu verschieben;
Verschieben (604-616, 700) des Präsentierens von Nachrichten in Übereinstimmung mit den Verschiebedaten;
Empfangen von Verifizierungsdaten (305) von jeweiligen Vorrichtungen, die das Präsentieren von Nachrichten verifizieren; und
Vorsehen (900) von Rechnungsgutschriftinformation (113) in Reaktion auf ein Bestimmen eines Vorteils.

14. System gemäß Anspruch 13, wobei die Verifizierungs- und Verschiebe-Überwachung konfiguriert ist, einen verzögerten Präsentations-Auslöser an eine jeweilige Kommunikationsvorrichtung in Übereinstimmung mit den Verschiebedaten zu liefern (706).

15. Computerimplementiertes Verfahren für einen Kommunikationsserver (110) zur Verwaltung des Präsentierens von Nachrichten auf einer oder mehreren Kommunikationsvorrichtungen, wobei das Verfahren aufweist:
Liefern (800) von Nachrichten (116, 122) an die Kommunikationsvorrichtungen zum Präsentieren als ein Vorläufer zum Initiieren einer Kommunikation über eine jeweilige Kommunikationsvorrichtung, **dadurch gekennzeichnet, dass** zumindest einige der Kommunikationsvorrichtungen konfiguriert sind zum Bestimmen,
ob das Präsentieren der Nachricht über die Computervorrichtung verschoben werden soll, um **dadurch** die Kommunikation zu initiieren, ohne das vorherige Präsentieren der Nachricht zu erfordern;
Überwachen (800, 900) der Verifizierung des Präsentierens der Nachrichten;
Empfangen (600) von Verschiebedaten von jeweiligen Vorrichtungen, um das Präsentieren von Nachrichten zu verschieben; und
Verschieben (604-616, 700) des Präsentierens von Nachrichten in Übereinstimmung mit den Verschiebedaten.

## Revendications

1. Procédé de communication à l'aide d'un dispositif informatique (102A à 102N), le procédé comprenant les étapes consistant à :
recevoir (404) une première entrée (312) indiquant une demande de lancement d'une communication à l'aide du dispositif informatique, dans lequel une étape précédant le lancement de la communication comprend la présentation d'un message (122) à l'aide du dispositif informatique en réponse à ladite demande,
le procédé étant **caractérisé par** les étapes consistant à :
déterminer (406A, 406B) s'il convient de reporter la présentation du message à l'aide du dispositif informatique afin de pouvoir lancer la communication sans qu'il soit nécessaire de présenter au préalable le message ;
reporter (414, 416) la présentation en fonction de la détermination ; et
lancer (420) la communication en fonction de la détermination.

2. Procédé selon la revendication 1, dans lequel ladite étape de détermination (406A) est exécutée avant d'appeler (408A) la présentation du message.

3. Procédé selon la revendication 1, comprenant l'étape consistant à appeler (408B) la présentation du message et dans lequel ladite étape de détermination (406B) est exécutée pendant ladite présentation, si bien que ladite étape de report interrompt la présentation du message.

4. Procédé selon l'une quelconque des revendications 1 à 3, dans lequel ladite étape de détermination (406A, 406B) est exécutée en réponse à la réception d'une seconde entrée (312) à l'aide du dispositif informatique.

5. Procédé selon l'une quelconque des revendications 1, 2 et 3, dans lequel ladite étape de détermination (406A, 406B) est exécutée automatiquement, sans réception d'une seconde entrée à l'aide du dispositif informatique.

6. Procédé selon l'une quelconque des revendications 1 à 5, comprenant en outre l'étape consistant à déterminer (414, 416) des données de report (305) et à fournir (418) les données de report pour gérer le report de la présentation du message.

7. Procédé selon la revendication 6, comprenant en outre l'étape consistant à présenter (500) le message à l'aide du dispositif informatique en fonction des données de report.

8. Procédé selon la revendication 7, dans lequel l'étape de fourniture des données de report comprend l'étape consistant à communiquer (418) les données de report à un système de communication (110, 112) configuré pour surveiller la vérification de la présentation de messages à l'aide de dispositifs informatiques et dans lequel le procédé comprend en outre l'étape consistant à recevoir (504) un événement déclencheur afin de présenter le message en fonction des données de report.

9. Procédé selon la revendication 6 ou la revendication 7, dans lequel les données de report (416, 516) comprennent des informations qui indiquent s'il convient de :
(a) reporter à un autre moment la présentation du message à l'aide du dispositif informatique ;
(b) reporter la présentation du message à l'aide d'un autre dispositif informatique ; ou
(c) acheminer le message à présenter vers un autre utilisateur.

10. Procédé selon l'une quelconque des revendications 1 à 9, comprenant l'étape consistant à fournir des données de vérification (412, 512) en réponse à la présentation du message à l'aide du dispositif informatique.

11. Dispositif informatique (102A à 102N), **caractérisé par** : un sous-système de communication (211, 221, 242), un processeur (238) et une mémoire (224) comprenant des instructions et des données qui, lorsqu'elles sont exécutées, configurent le processeur pour exécuter un procédé de communication selon l'une quelconque des revendications 1 à 10.

12. Mémoire lisible par ordinateur (224), **caractérisée par** : des instructions qui, lorsqu'elles sont exécutées sur un dispositif informatique, commandent au dispositif informatique d'exécuter un procédé de communication selon l'une quelconque des revendications 1 à 10.

13. Système mis en oeuvre par ordinateur (110, 112), destiné à gérer la présentation de messages (122) sur un ou plusieurs dispositifs de communication (102A à 102N, 130A à 130C, 132), le système comprenant :
une base de données de messages (116), destinée à fournir des messages aux dispositifs de communication, afin de les présenter comme une étape précédant le lancement d'une communication à l'aide d'un dispositif de communication respectif ;
**caractérisé en ce qu'**au moins certains des dispositifs de communication sont configurés pour déterminer s'il convient ou non de reporter la présentation du message à l'aide du dispositif informatique afin de lancer ainsi la communication sans qu'il soit nécessaire de présenter le message au préalable ; et
un moyen de surveillance de la vérification et du report (112C), destiné à surveiller une vérification de la présentation des messages à l'aide des dispositifs de communication respectifs, le moyen de surveillance de la vérification et du report étant configuré pour :
recevoir (602) des données de report (306), en provenance de dispositifs respectifs, afin de reporter la présentation de messages ;
reporter (604 à 616, 700) la présentation de messages en fonction des données de report ;
recevoir des données de vérification (305), en provenance de dispositifs respectifs, qui vérifient la présentation de messages ; et
fournir (900) en réponse des informations auxiliaires de facturation (113) pour déterminer un avantage.

14. Système selon la revendication 13, dans lequel le moyen de surveillance de la vérification et du report est configuré pour fournir (706) un événement déclencheur de présentation retardée à un dispositif de communication respectif, en fonction des données de report.

15. Procédé, mis en oeuvre par ordinateur, pour qu'un serveur de communication (110) gère la présentation de messages sur un ou plusieurs dispositifs de communication, le procédé comprenant les étapes consistant à :
fournir (800) des messages (116, 122) aux dispositifs de communication afin de les présenter sous la forme d'une étape précédant le lancement d'une communication à l'aide d'un dispositif de communication respectif ;
**caractérisé en ce qu'**au moins certains des dispositifs de communication sont configurés pour déterminer s'il convient ou non de reporter la présentation du message à l'aide du dispositif informatique afin de lancer ainsi la communication sans qu'il soit nécessaire de présenter le message au préalable ;
surveiller (800, 900) la vérification de la présentation des messages ;
recevoir (600) des données de report en provenance des dispositifs respectifs, afin de reporter la présentation des messages ; et
reporter (604 à 616, 700) la présentation des messages en fonction des données de report.
